Europäisches Patentamt

European Patent Office

Office européen des brevets

(11) Publication number: **0 469 202 A1**

# EUROPEAN PATENT APPLICATION

(21) Application number: 90308516.5

(22) Date of filing: 02.08.90

(51) Int. Cl.⁵: **G06F 12/08**

(43) Date of publication of application:
**05.02.92 Bulletin 92/06**

(84) Designated Contracting States:
**AT BE CH DE DK ES FR GB GR IT LI LU NL SE**

(71) Applicant: **DIGITAL EOUIPMENT CORPORATION**
**146 Main Street**
**Maynard, MA 01754(US)**

(72) Inventor: **Falcone, Joseph R.**
**120 Crescent Street**

**Auburndale, Massachusetts 02166(US)**
Inventor: **Love, James S. III**
**1 Annie J. Circle**
**Milford, Massachusetts 01757-1870(US)**
Inventor: **Wherry, Bradley G.**
**500 Nickerson Rd., NKS5-2/D3**
**Marlborough, Massachusetts 01752(US)**

(74) Representative: **Goodman, Christopher et al**
**Eric Potter & Clarkson St. Mary's Court St.**
**Mary's Gate**
**Nottingham NG1 1LE(GB)**

(54) Sequential reference management for cache memories.

(57) Methodology for replacing data stored in a cache for a random-access mass storage memory system which protects the cache from flooding by pathological processes that have long sequential or non-repeating access patterns.

FIG. I

Field of the Invention

The present invention relates to data sorting methodology and apparatus for cache memory management, and more particularly to data replacement methodology and apparatus for mass storage devices (MSD's) which comprise a cache for storing portions of data retrieved from the MSD.

Background of the Invention

Random-access MSD's, such as optical or magnetic disk drives, and other storage and file subsystems characterized by slow data access times, frequently have at least one associated cache which stores portions of data retrieved from the storage systems. The slow access times, which may be in the range of 500 microseconds to 500 milliseconds, allow the cache to enhance the performance of the MSD for applications which require that the data retrieved from the MSD be frequently re-used. The cache stores the frequently used data so that the MSD does not have to repeatedly retrieve it from the storage system using time consuming techniques.

The data which is retrieved from the MSD and stored in a cache is generally data which is requested by one or more processes. The processes may have request referencing patterns which let the cache enhance the performance of the MSD, or the processes may have referencing patterns which prevent the cache from benefiting the storage system at all. In practice, those processes which have referencing patterns which do not permit effective cache utilization tend to degrade the performance of the cache for other processes.

The performance of a cache is measured by the percentage of the total requests that can be satisfied by the cache. The use of a cache eliminates the slow mechanical operations associated with re-acquiring or repeatedly retrieving the requested data from the storage system. Process referencing patterns allow the cache to perform well if the process repeatedly requests data from the same MSD locations so that the data is found in the cache on subsequent references. The cache performs poorly if the processes request data from distinct MSD locations only once or infrequently.

If a cache has a storage capacity which is smaller than a sequence of references to distinct data items requested by a process, all of the previous contents of the cache can be pushed out of the cache. Furthermore, this flooding effect reduces the effectiveness of the cache for other processes whenever long sequential references occur which replace a substantial fraction of the cache storage capacity.

One example of such a long sequential reference to an MSD such as a magnetic disk drive is a disk backup, which effectively makes one long sequential reference to the entire disk. A conventional cache will be flooded by this useless data. Typically this problem is solved by modifying the backup process to bypass the cache. However, only the worst and most predictably pathological processes can be dealt with in this way. This invention permits automatic detection of and compensation for long sequential references without requiring that they be identified in advance or that pathological processes be modified.

The least recently used (LRU) and least frequently used (LFU) replacement algorithms have been used to sort data in the cache to enhance its performance with process request referencing patterns. The LRU replacement algorithm works by organizing the data in the cache in a list of data blocks which is sorted according to the length of time since the most recent reference to each data block. The most recently used (MRU) data is at one end of the list, while the least recently used (LRU) data is at the other. New data is added to the MRU end of the list. When data is to be discarded by the cache for accommodating the receipt of new data, the discarded data comes from the LRU end of the list. However, the LRU algorithm does not eliminate the long sequential reference problem.

The LFU algorithm sorts data in the cache according to the number of times that it has been used. The LFU algorithm organizes the cache data in a list, with new data which has only been used once on a LFU end of the list and the most re-used data on a most frequently used (MFU) end of the list. Although the LFU algorithm is immune to the long sequential reference problem, it has other drawbacks. With the pure LFU algorithm, there is no way for data which was once heavily used to leave the cache when it is no longer needed. The overhead of computing the LFU order is higher than LRU. When an aging scheme is implemented to remove old data from the cache using the LFU algorithm, the overhead is much higher than with the LRU replacement algorithm.

Description of the Drawings

Figure 1 is a block diagram of the preferred embodiment of the invention.

Figure 2 is a block diagram of an alternative embodiment of the invention.

Figure 3 is a block diagram of another alternative embodiment of the invention.

Summary of the Invention

The present invention comprises methodology and apparatus for partitioning the data in a cache into collections which provides promotion between a plurality of such collections. Each collection can use a replacement algorithm such as LRU.

In its most basic form, the cache is arranged to divide its stored data into a first LRU collection of data and at least one other LRU collection of data. Data retrieved from either of the collections by one of the processes is added to a first one of the collections. Data in any of the collections which is least recently used is removed by that collection, as needed. The removed data from the first collection and new data retrieved from an MSD are added to the last collection. In this way, data retrieved by the processes is promoted to the first collection and least recently used data removed from the first collection is added with the new memory resource data to the last collection. The resulting algorithm approximates the operation of the LFU algorithm, without the drawbacks of the LFU algorithm. The approximation is closer as the number of collections are increased. However, the cost of the cache algorithm also increases with the number of collections.

Description of the Preferred Embodiment

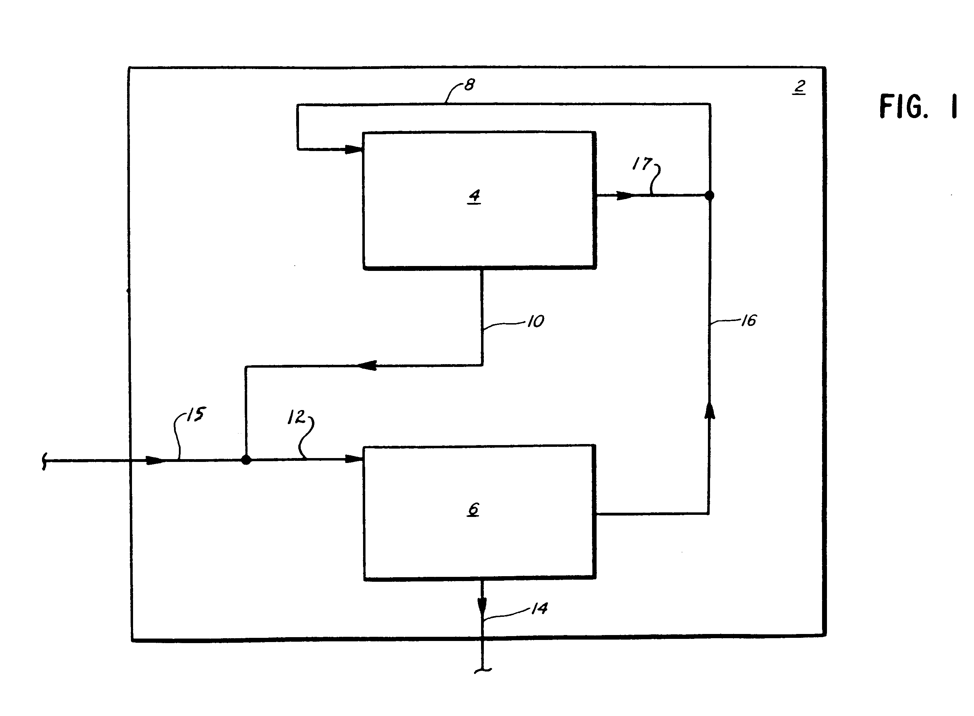

Referring to the drawings, wherein like reference characters designate like or corresponding parts throughout the views, Figure 1 is a block diagram of the preferred embodiment of the invention using two collections of data. However, it is within the scope of the present invention to use more than two collections of data if desired. A cache 2 for a MSD (not shown) comprises two memory regions, a first region 4 and a second or last region 6. The first region 4 and the second region 6 sort stored data blocks according to an LRU replacement algorithm. The first region 4 receives new data blocks on a most recently used input via a line 8. The first region 4 removes least recently used data from a LRU output on a line 10. Least recently used data is removed on the line 10 from the first region 4 after the first region 4 is filled by new data received on the line 8.

The second region 6 receives new data on a MRU input via a line 12. The second region 6 removes and discards least recently used data from a LRU output via a line 14. The new data received by the second region 6 on the line 12 comprises both new data received from an associated MSD system (not shown) on line 15 and the removed data from the first region 4 fed to the line 12 on the line 10.

The first region 4 has a select output on line 17 coupled to the line 8 for removing data selected from the data sorted in the first region 4 in response to a request for the selected data, such as from a process. The selected data retrieved from the first region 4 is sent back to the MRU input of the first region 4 via the line 8 for re-sorting, since its selection has made it most recently used. The second region 6 has a select output coupled to the line 8 via a line 16 for removing data selected from the data sorted in the second region 6 in response to a request for data, such as from a process. The selected data retrieved from the second region 6 is fed via line 16 to the MRU input of the first region 4 via the line 8 for re-sorting in the first region 4, since its selection has made it most recently used.

Consequently, for the preferred embodiment, data selected from either the first region 4 or the second region 6 re-sorts the data in the first region 4 to make the selected data the most recently used of the data in the first region 4. Likewise, both new data from the MSD and removed data from the first region 4 re-sort the data in the second region 6 to make the new data from the MSD on line 15 or the removed data from the first region 4 on the line 10 the most recently used of the data in the second region 6.

In the event that a string of new data from the MSD system on line 15 begins to fill up the second region 6, least recently used data is removed and discarded on the line 14. However, the first region 4 is not affected by the loading of new data into the second region 6 except to the extent that data selected from the new data in the second region 6 is loaded into the first region 4 in response to a process request. The data sorted in the first region 4 is resistant to long sequential references received by the cache 2 on the line 15 since it has higher priority than the data fed to the second region 6. This is because the removed data on the line 10 from the first region 4, together with the new MSD data on the line 15, is fed to the input of the second region 6. The first region 4 is only loaded with process requested data retrieved from the first region 4 and the second region 6.

The effect of the cache 2 described above is to retain data which has been requested more than once much longer than data which has been used only once. This is because any data selected from either the first region 4 or the second region 6 is fed to the most recently used input of the first region 4. This data then must pass through both the first region 4 and the second region 6 before it is discarded via the line 14. However, data which is used only once is retained only for as long as it remains in the second region 6. That is, the data loaded into the second region 6 will pass through the second region 6 and will be discarded on the line 14 if it is not subsequently again selected prior to being discarded.

Of course, the first region 4 and the second region 6 can be part of the same memory. If one memory is used, the data need not be physically moved when it logically moves from the first region 4 to the second region 6. A single LRU algorithm may comprise the first region 4 and the second region 6 if insertions of new data from the MSD are inserted into the middle of the single LRU algorithm with a "cursor" which points into the middle of the sorted data in the algorithm. The cursor must be updated whenever the single algorithm is updated.

The present invention may use a fixed ratio of memory between the first region 4 and the second region 6, such as half and half, or it can be dynamically controlled to change the proportions of memory according to different conditions. For instance, the length of time that data is in the first region 4 and the second region 6 can determine their relative sizes. The second region 6 can shrink as long as a minimum time for possible promotion of its sorted data to the first region 4 is maintained. The first region 4 can shrink if the length of time since the second selection of data from the first region 4 is extremely long.

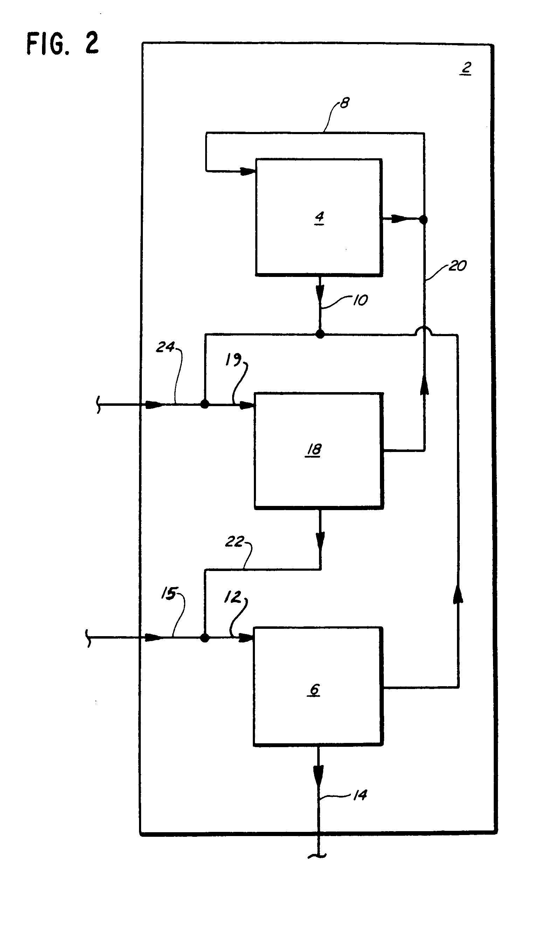

A cache with more than the first region 4 and the last region 6 may be used as well. Figure 2 is a block diagram for an alternate embodiment of the present invention in which the cache 2 has an intermediate region 18 as well as the first region 4 and the last region 6. The intermediate region 18 also sorts stored data according to a LRU replacement algorithm. The first region 4 removes and transfers via the line 10 least recently used data to a MRU input line 19 to the intermediate region 18.

Data selected from the sorted data in the last region 6 is fed to the MRU input line 19 to the intermediate region 18 via the line 16. Data selected from the sorted data in the intermediate region 18 is fed via select output line 20 to the MRU input of the first region 4 via line 8, which also feeds data selected from the first region 4 to the MRU input of the first region 4 as described above. Least recently used data removed from the intermediate region 18 is fed to the most recently used input of the last region 6 via a line 22 coupled to the line 12.

New data from an associated MSD (not shown) is fed to the MRU input of the last region on the line 15, or to the MRU input line 19 of the intermediate region 18 via a line 24, depending upon the desired prioritization of the new input data. For instance, new data coupled to the line 15 must pass only through the last region 6 without selection before being discarded on the line 14. New data received on the line 24 must pass through both the intermediate region 18 and the last region 6 without selection before being discarded on the line 14.

In the alternate embodiment of Fig. 2, data selected from either the first region 4 or the intermediate region 18 re-sorts the data in first region 4 to make the selected data the most recently used of the data in the first region 4. Least recently used data removed from the first region 4 as a result of data overflow in the first region 4 is fed via lines 16 and 19 to the MRU input of the intermediate region 18. Data selected from the last region 6 is also fed via lines 16 and 19 to the MRU input of the intermediate region 18. Least recently used data removed from the intermediate region 18 as a result of data overflow in the intermediate region 18 is fed via lines 22 and 12 to the MRU input of the last region 6. Data is finally discarded by the last region 6 via line 14 as a result of data overflow in the last region 6.

The first region 4, intermediate region 18 and the last region 6 may have statically fixed or dynamically adjusted size ratios as described above for the preferred embodiment. They also may comprise different regions of a single memory. Further, there may be more than three regions which are connected in a sequential order as shown above, or in other configurations which are not sequential. Data can be segregated according to other criteria, such as separating read and write operations which pass through the cache.

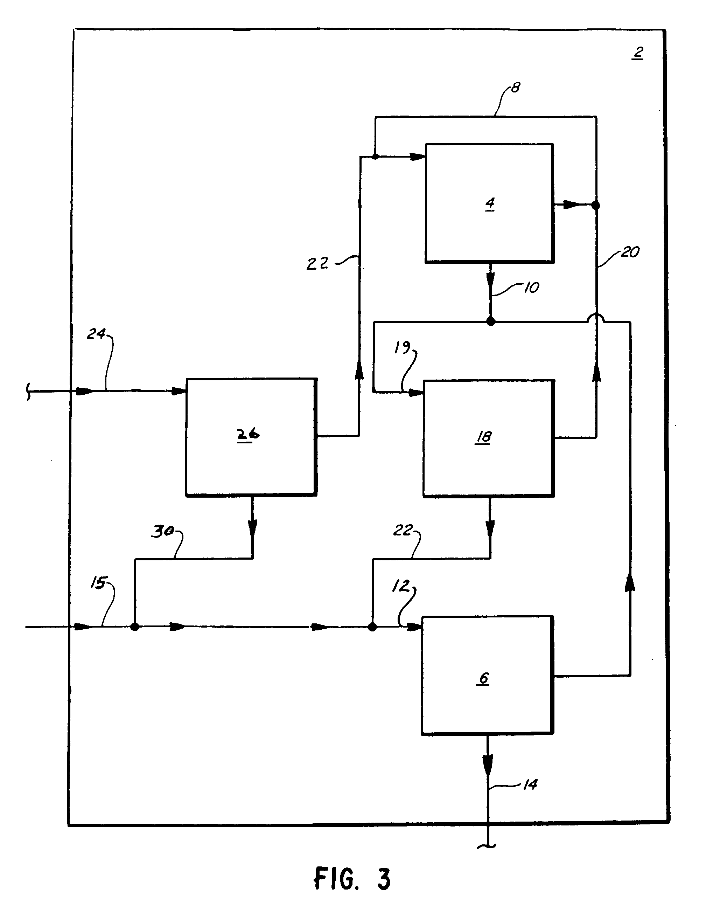

Figure 3 shows still another embodiment of the present invention. In this embodiment the cache 2 separates the prioritization of read and write data. Read data not already in the cache is received on the line 15 and fed to the MRU input of the last region 6 via the line 12. The prioritization of the read data is the same as described above for the alternative embodiment in connection with Figure 2. Write data for MSD locations not already in the cache is fed on the line 24 to the MRU input of a second intermediate region 26. Data selected from the second intermediate region 26 is fed from its select output on a line 28 to the MRU input of the first region 4 via the line 8. Data removed from the second intermediate region 18 from overflow on a line 30 is fed to the MRU input of the last region 6 via the line 12.

In this way, the first region 4 holds data requested three times or written and quickly requested before being removed from region 26. The first intermediate region 18 holds data selected twice along with data overflow from the first region 4. The second intermediate region 26 holds newly written data. The last region 6 holds data selected once along with data overflow from the first intermediate region 18 and the second intermediate region 26.

Thus, there has been described herein cache management for preventing flooding of a cache with long sequential references from an associated mass storage device with a replacement algorithm which approximates a LFU algorithm, while retaining the advantages of a LRU replacement algorithm. It will be understood that various changes in the details, arrangements and configuration of the parts and systems which have been described and illustrated above in order to explain the nature of the present invention may be made by those skilled in the art within the principle and scope of the present invention as expressed in the appended claims.

## Claims

1. A method of sorting data retrieved from a memory resource, comprising the steps of:

    sorting data into a plurality of collections comprising at least a first collection and a last collection;

    removing said sorted data from said collections;

    adding said removed data from each of said collections to a selected one of said collections;

    adding said sorted data requested from each of said collections to a selected one of said collections; and

    adding new data retrieved from said memory resource to a selected one of said collections.

2. A method of sorting data retrieved from a memory resource, comprising the steps of:

    sorting data into a plurality of collections comprising at least a first collection and a last collection;

    removing said sorted data least recently requested from said collections;

    adding said removed data from each of said collections to a selected one of said collections;

    adding said sorted data requested from each of said collections to a selected one of said collections; and

    adding new data retrieved from said memory resource to a selected one of said collections.

3. A method of sorting data retrieved from a memory resource, comprising the steps of:

    sorting data into a first collection and a second collection according to recency of request of said sorted data from said first and second collections;

    adding said sorted data requested from said first and second collections to said first collection;

    removing said sorted data least recently added from said first and second collections; and

adding new data retrieved from said memory resource and said sorted data removed from said first collection to said second collection.

4. A method of sorting data retrieved from a memory resource, comprising the steps of:

    sorting data into a first collection, an intermediate collection and a last collection according to recency of selection of said sorted data from said first, intermediate and last collections;

    removing said sorted data least recently added from said collections;

    adding said sorted data requested from said first and intermediate collections to said first collection;

    adding said removed data from said first collection to said intermediate collection;

    adding said removed data from said intermediate collection to said last collection;

    adding said data requested from said last collection to said intermediate collection;

    adding new data retrieved from said memory resource to a selected one of said collections; and

    discarding said removed data from said last collection.

5. A method for caching blocks of data retrieved from a mass storage device in a computer system comprising the steps of:

    storing a block of the data in a most recently used area of a low priority memory region, said storing step causing another previously stored block of data in a least recently used area of said low priority memory region to be removed and discarded;

    transferring a first selected block of data from said low priority memory region to a most recently used area of said high priority memory region in response to a request for said first selected block for use by the computer system, and causing another previously stored block of data in a least recently used area of said high priority memory region to be stored in said most recently used area of said low priority memory region; and

    transferring a second selected block of data from said high priority memory region to said most recently used area of said high priority memory region in response to a request for said second selected block for use by the computer system.

6. An apparatus for caching blocks of data retrieved from a mass storage device in a computer system comprising the steps of:

means for storing a block of the data in a most recently used area of a low priority memory region and for causing another previously stored block of data in a least recently used area of said low priority memory region to be removed;

means for transferring a first selected block of data from said low priority memory region to a most recently used area of said high priority memory region in response to a request for said first selected block for use by the computer system and for causing another previously stored block of data in a least recently used area of said high priority memory region to be stored in said most recently used area of said low priority memory region; and

means for transferring a second selected block of data from said high priority memory region to said most recently used area of said high priority memory region in response to a request for said second selected block for use by the computer system.

# FIG. I

FIG. 2

FIG. 3

European
Patent Office

**EUROPEAN SEARCH
REPORT**

Application Number

**EP 90 30 8516**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 215 887 (INTERNATIONAL COMPUTERS LTD.) * figure 1; page 2, line 4 - page 3, line 5 * − − − | 1-6 | G 06 F 12/08 |
| A | IBM TECHNICAL DISCLOSURE BULLETIN vol. 26, no. 8, January 1984, page 4263, Armonk, NY, US; J.H. POMERENE et al.: "Multiple Directories for a Second Level of Storage" − − − − − | 1-6 | |

| | |
|---|---|
| | TECHNICAL FIELDS SEARCHED (Int. Cl.5) |
| | G 06 F |

The present search report has been drawn up for all claims

| Place of search | Date of completion of search | Examiner |
|---|---|---|
| Berlin | 17 April 91 | ABRAM R |